# EUROPEAN PATENT APPLICATION

(11) **EP 2 796 055 A1**
(43) Date of publication of application: **29.10.2014**
(21) Application number: 12860310.7
(22) Date of filing: 17.12.2012
(51) Int. Cl.: A23K 1/18, A23K 1/16, A23K 1/175

(54) **PET FOOD**

(30) Priority: 21.12.2011 JP 2011280594; 29.02.2012 JP 2012044741
(71) Applicant: Unicharm Corporation, Ehime 799-0111 (JP)
(72) Inventor: SAKODA, Junya, Itami-shi Hyogo 664-0831 (JP); USUI, Takahiro, Itami-shi Hyogo 664-0831 (JP)
(74) Representative: Peter, Julian
(86) International application number: PCT/JP2012/082711
(87) International publication number: WO 2013/094575

(57) **Abstract**

In a pet food for a senior cat, and the like, for which strict adjustment of the content of the mineral component is required, to provide a pet food excellent in terms of palatability at the same time while stabilizing the quality by the strict adjustment of the mineral component. the content ratio of free amino acid present on the surface of pet food pellets is 5.0% or more relative to total free amino acid of the pet food, and a fluctuation range as defined by the maximum to the minimum value of total mineral content among ten lots of product is 1.0% or less.

## Description

### TECHNICAL FIELD

The present invention relates to a pet food. More specifically, the present invention relates to a pet food that prevents the generation of uroliths in a pet such as a cat, and has favorable palatability.

### BACKGROUND ART

It is a well-known fact that there is a case of generating a calculus in the urinary tract in a dog or a cat. In addition, a mineral component in a pet food has a high degree of influence on the pH and components of urine. In order to correct the disorder, for example, in Patent Document 1, there is a disclosure in that the condition of the urinary tract of canines can be favorably maintained by the limitation of the content of a mineral component such as phosphorus and calcium in a pet food to a specific range.

[Patent Document 1] Japanese Unexamined Patent Application (Translation of PCT Application), Publication No. 2003-518938

### DISCLOSURE OF THE INVENTION

### Problems to be Solved by the Invention

As described above, it is well known that the generation of urinary calculi can be suppressed by the adjustment of the mineral component that has a high degree of influence on the urine pH and the urine components. For example, with respect to a pet food for a senior cat, for which suppression of the generation of uroliths is particularly required, it is required that when the pet food is produced, the mineral component is limited to a strictly constant range.

On the other hand, an animal-derived protein source such as chicken meal and fish meal is contained in a conventional common pet food for a cat as a protein source. These animal-derived protein sources serve as a mineral source at the same time, and also enhance palatability. However, the mineral component content of each product lot of these animal-derived protein sources has a large fluctuation range. Therefore, in the production of a pet food for a senior cat, and the like, for which strict adjustment of the content of the mineral component is required, the large fluctuation range has become a factor that decreases the stability of quality.

Therefore, in the production of a pet food for a senior cat and the like, it is considered that a plant-derived protein source such as corn gluten, which has a relatively small fluctuation range of the mineral component content in each product lot, may be used in place of the animal-derived chicken meal, fish meal, or the like, as a protein source. As a result, in the production of a pet food for a senior cat, and the like, the stability of quality can be enhanced by the strict adjustment of the content of the mineral component.

However, there was a problem that when the plant-derived protein source is used in place of the animal-derived protein source, the palatability is decreased. That is, in a pet food that requires strict adjustment of the mineral component, such as a pet food for a senior cat of 6 years or over, for which suppression of the generation of uroliths is required, the palatability has to be sacrificed in order to strictly adjust the mineral component in a current situation, and thus in this respect, further improvement is required.

The present invention has been made in view of the above situation, and is to provide a pet food excellent in terms of palatability at the same time while stabilizing the quality by the strict adjustment of the mineral component.

### Means for Solving the Problems

As a result of the intensive study to solve the problem described above, the present inventors found that even in the case of using a plant-derived protein source as the main protein source, the decrease in the palatability can be sufficiently prevented by the presence of free amino acid on the surface of pet food pellets at a predetermined ratio or more, and thus have completed the present invention. Specifically, the present invention provides the following.
(1) A pet food, in which the content ratio of free amino acid present on the surface of pet food pellets is 5.0% or more relative to the total free amino acid content of the pet food, and a fluctuation range as defined by the maximum to the minimum value of total mineral content among ten lots of product is 1.0% or less.
(2) The pet food described in (1), in which the fluctuation range of the phosphorus content of each product lot is 0.2% or less.
(3) A pet food, containing a plant-derived protein source material in the pet food at a ratio of 12% by mass or more to 20% by mass or less, and an animal-derived protein source material in the pet food at a ratio of 20% by mass or less, wherein the surface of pet food pellets is coated with a palatability enhancing material containing amino acid, and the palatability enhancing material is contained in the pet food at a ratio of 1.5% by mass or more.
(4) The pet food described in any one of (1) to (3), in which an inorganic compound supplementing a mineral component is also added.
(5) The pet food described in any one of (1) to (4), in which the total mineral content in the plant-derived protein source material is 7% by mass or less, and the total mineral content in the animal-derived protein source material is 10% by mass or more.
(6) The pet food described in any one of (1) to (5), in which the plant-derived protein source material is corn gluten.
(7) The pet food described in any one of (1) to (6), in which the corn gluten is contained in the pet food at a ratio of 12% by mass or more to 20% by mass.
(8) The pet food described in any one of (1) to (7), in which the phosphorus content is 0.50% by mass or more to less than 0.75% by mass.
(9) The pet food described in any one of (1) to (8), in which the pet food is a pet food for a cat.
(10) The pet food described in any one of (1) to (9), in which the cat is a cat of 6 years or over.
(11) A method for producing a pet food, including: forming a pet food source material containing a protein source material that includes a plant-derived protein source material having a protein content of 40% by mass or more to 80% by mass or less at a content ratio of 12% by mass or more and an animal-derived protein source material having a protein content of 40% by mass or more to 80% by mass or less at a content ratio of 20% by mass or less, into pellets; and coating the surface of pet food pellets with a palatability enhancing material containing amino acid, in which the amount of coating of the palatability enhancing material is adjusted so as to be 1.5% by mass or more in the pet food.

### Effects of the Invention

According to the present invention, a pet food in which the strict adjustment of mineral component can be performed and also the palatability is excellent, by using a plant-derived protein source material as the main protein source material.

### PREFERRED MODE FOR CARRYING OUT THE INVENTION

Hereinafter, the embodiments of the present invention will be explained in detail, however, the present invention should not be limited to the following embodiments, and can be carried out by appropriately adding changes in the range of the object of the present invention.

### Basic formulation of pet food

In the present invention, a pet food means a feed that is provided to a pet animal. A pet animal means an animal that is reared by a human and lives with a human, and the kind is not particularly limited. In the present embodiments, the pet food is explained as a pet food for a cat. This pet food is a feed containing a desired nutrient composition that is tailored to the age and nature of a cat.

The pet food in the present embodiments is, for example, a dried granular solid having a moisture content of 12% by mass or less, a so-called dry type.

Firstly, the raw material and formulation that are used for the pet food will be explained. As to the raw material, a material other than the protein source material that is a feature of the present invention, is not particularly limited, and a conventionally known formulation can be employed. As one of the examples of the formulation of raw material, the following formulation can be used. That is, the one of the examples of the formulation contains 10 to 60% by mass of a grain such as corn, 0 to 10% by mass of a fiber source material such as beet pulp, 2 to 20% by mass of animal oil and fat, 1 to 3% by mass of minerals/vitamins as a single component, 0.1 to 4.0% by mass of a palatability enhancing material containing amino acid that is composed of an extract of meat and vegetables, and the like, and 12% by mass or less of an appropriate amount of moisture, and also 10 to 40% by mass of a protein source material that will be explained in detail in the following.

### Protein source material

In the present invention, a protein source material means an animal-derived processed product containing mainly protein, or a plant-derived processed product containing mainly protein among the materials to be added into a pet food in order that the amount of protein in the pet food is in a preferable range. Specifically, the content of protein measured by a Kjeldahl method is preferably 40% by mass or more to 80% by mass or less. An animal-derived protein source material obtained by processing meat such as chicken or pork, and a plant-derived protein source material obtained by processing a grain such as corn are included in the above protein source material.

Specific examples of the plant-derived protein source material include a processed product of corn, such as corn gluten. As shown in Example below, in all of these plant-derived protein source materials, as compared to the following animal-derived protein source material, the content of the total mineral is less, and the fluctuation range of the mineral content of each product lot is relatively extremely small. Among them, corn gluten, which is available at low cost and is also excellent in terms of stability of the mineral content, can be preferably used. In addition, the corn gluten in the present invention means that obtained by the separation of protein in a purification process of corn. Furthermore, the total mineral content contained in a plant-derived protein source material is generally 7% or less, which is the value in crude ash that is measured by a heating ashing method. In addition, hereinafter, in the present specification, the total mineral content means the value described above unless otherwise specifically described.

Specific examples of the animal-derived protein source material include a processed product containing a meat of animal as the main component, such as a pork meal, a chicken meal, and a fish meal. All of these are a protein source and at the same time contain amino acid, and thus can contribute to the enhancement of the palatability of pet food as a taste component. However, in the animal-derived protein source material, as shown in Example below, as compared with the above plant-derived protein source material, the total mineral content is larger, and the fluctuation range of the mineral content of each product lot is relatively extremely large. Furthermore, the total mineral content contained in an animal-derived protein source material is generally 10% or more to 20% or less, which is the value in crude ash that is measured by a heating ashing method. However, even in the animal-derived protein source material, for example, there is one that does not substantially contain a mineral component, such as beef tallow residue. This does not become a factor in the problem of the variation of mineral component, therefore, as long as the content is in the predetermined range, the animal-derived protein source material can be preferably used in combination with a plant-derived protein source material. For example, the beef tallow residue is preferably contained at a ratio of 10% or more to less than 15%.

Herein, in the present specification, an animal oil and fat such as a beef tallow, and a chicken fat, which does not contain the meat of an animal as the main component, and a grain such as a corn, or a wheat flour, which is not subjected to any special processing other than simple drying, are not included in the protein source material described above, even if the animal oil and fat and the grain contain protein. An essential feature of the present invention is to exert the excellent effect of achieving a balance between the stability of mineral component adjustment and the palatability retention, under the circumstances that the decrease of the content of the "animal-derived protein source material" according to the above definition, and the increase of the content of the "plant-derived protein source material" according to the above definition have become an inseparable requirement in order to ensure the stability of quality. Therefore, the content of the animal oil and fat, grain and the like described above cannot be an essential constituent that limits the scope of the present invention.

In the present invention, a plant-derived protein source material is preferably used as the main protein source material. The content of plant-derived protein source material in a pet food is 12% by mass or more, and preferably 15% by mass or more. Furthermore, the content of animal-derived protein source material in a pet food is 20% by mass or less, and preferably 18% by mass or less. By setting the constitution of protein source material in a pet food to the range described above, the mineral content derived from a protein source material can be decreased while the amount of protein that is required for a pet food is maintained. Furthermore, by setting the constitution of protein source material in a pet food to the range described above, the mineral content of each product lot of a pet food product can be stably adjusted to the appropriate range. According to such a pet food of the present invention, the fluctuation range of mineral content of each product lot can be 1% or less. In the present specification, the fluctuation range of the mineral content of each product lot means the difference between the maximum (% by mass) and the minimum (% by mass) of the mineral content of each product lot among ten lots of product, each product lot is 50 kg to 100 kg.

Conventionally, a pork bone meal, a chicken meal, and the like are frequently used as an animal-derived protein source material, however, in the present invention, the content of the animal-derived meal other than fish, such as a pork bone meal, and a chicken meal is 0% by mass, that is, such animal-derived meal is not preferably used at all. However, a fish-derived meal such as a fish meal can be preferably used as a ω3 fatty acid source or a protein source material in place of the various animal-derived meals described above, in the content range of 10% by mass or less.

The content of the total mineral in a pet food may be appropriately adjusted in the range of 1% or more to 8% in accordance with the application and purpose of the pet food. However, as to a pet food for a senior cat, from the viewpoint of calculi prevention, the content of each mineral is preferably adjusted so that the total mineral content is in the range of from 3% to 5%. Furthermore, as described above, by using a plant-derived protein source material as the main protein source material, the fluctuation range of the phosphorus content of each product lot can be 0.2% or less in the pet food of the present invention. Therefore, the total mineral content can be adjusted in the preferable range with high accuracy.

In addition, it has been found that the condition of the urinary tract can be favorably maintained by the limitation of the content of especially phosphorus among the minerals in a pet food into a specific range. Therefore, in particular, it is more preferable to adjust the content of each mineral so that the total content of phosphorus in a pet food is in the range of 0.50% or more to 0.75% or less. In addition, in the pet food of the present invention, the fluctuation range of the phosphorus content of each product lot can be 0.2% or less. Therefore, the phosphorus content can be adjusted in the preferable range described above with high accuracy in the same manner as described above.

### Inorganic compound

In the present invention, an inorganic compound supplementing a mineral component may also be added. According to this, the total mineral content can be adjusted in the desired range, and also, in the present invention, by the replacement of part of the animal protein source material with a plant protein source material, the mineral content of each pet food product lot can be stably adjusted in the appropriate range.

An inorganic compound supplementing a mineral component can be appropriately selected depending on the kind and amount of the mineral to be supplemented. For example, examples of the calcium source include calcium carbonate, and calcium phosphate. Furthermore, examples of the phosphorus source include calcium phosphate. In addition, examples of the potassium source include potassium chloride.

### Palatability enhancing material

In the present invention, the palatability enhancing material is an additive material containing amino acid to be added in a pet food in order to enhance the palatability, and means a palatability enhancing material to be coated on the surface of pet food pellets. Examples of the palatability enhancing material include a meat extract, a fish extract, a vegetable extract, and a yeast extract, or a digest that is a taste agent containing these extracts. It is preferable to use two kinds or more of the extracts and digest described above in combination.

As to the raw material mixing ratio of the protein source material, the pet food of the present invention is to decrease the content of animal-derived protein source material, and to increase the content of plant-derived protein source material. By setting the raw material to such a raw material mixing ratio, while the stability of mineral component adjustment increases, a taste component such as amino acid that is contained in a meat of animals, and the like is decreased, and thus the palatability is lowered. However, in the pet food of the present invention, the decrease of the palatability is suppressed to the minimum by mixing the palatability enhancing material as in the manner described above, and by coating the surface of pet food pellets with the palatability enhancing material using the production method described below. As a result, the stable adjustment of mineral component and the retention of preferable palatability, the balance between which has been conventionally difficult to achieve, can be performed at the same time.

Furthermore, in the pet food of the present invention, the ratio of free amino acid present on the surface of pet food pellets is preferably 5.0% or more, and more preferably 20% or more relative to the total free amino acid content of the pet food. As a result, while the stable adjustment of the mineral component is performed in a pet food, the palatability of the pet food can be further enhanced.

Herein, the "free amino acid content" in the present specification means the total content of the free amino acid analyzed by the "analysis method of free amino acid" explained below. Furthermore, the "ratio of free amino acid present on the surface of pet food pellets relative to the total free amino acid content of the pet food" means the percentage value calculated by dividing the free amino acid content present on the surface of pet food pellets by the total free amino acid content of the pet food.

### Analysis method of free amino acid

In 1.5 g of pet food pellets, 25 mL of 10 w/v% sulfosalicylic acid solution is added and mixed, and the resultant mixture is shaken for 20 minutes and the amino acid is extracted. 3 mol/L sodium hydroxide solution is added to the obtained extract to neutralize the extract. Subsequently, a sodium citrate buffer solution with pH 2.2 is added, and the resultant extract is adjusted to pH 2.2 so that the volume is 50 mL in total. Furthermore, the resultant extract is filtered. Part of the filtrate thus obtained is fractioned to use as a test solution. By amino acid automatic analysis, the free amino acid content of 17 kinds of free amino acid, arginine, lysine, histidine, phenylalanine, tyrosine, leucine, isoleucine, methionine, valine, alanine, glycine, proline, glutamic acid, serine, threonine, aspartic acid, and cystine, is measured.

### (Operation conditions of amino acid automatic analyzer)

Model: L-8800-model High-Speed Amino Acid Analyzer [Hitachi High-Technologies Corporation]; Column: Hitachi Custom Ion Exchange Resin φ4.6 mm × 60 mm [Hitachi High-Technologies Corporation]; Mobile phase: MCI L-8500-PF (PF-1 to PF-4) [Mitsubishi Chemical Corporation]; Reaction mixture: Ninhydrin color development solution kit for Hitachi [Wako Pure Chemical Industries, Ltd.]; and Flow rate: Mobile phase 0.35 mL/minute.

Reaction mixture 0.30 mL/minute; and Measurement wavelength: 570 nm (during the measurement of 16 kinds of free amino acid except for proline), and 440 nm (during the measurement of proline).

Furthermore, tryptophan, which is not included in the 17 kinds of free amino acid described above, is measured in the following manner. 2.5 mL is fractioned from the filtrate described above, into which 3 mol/L sodium hydroxide solution is added to adjust the filtrate to slightly alkaline, and 10 mL of the adjusted filtrate, as a test solution, is analyzed by high performance liquid chromatography. The conditions are shown below.

### (Operation conditions of high performance liquid chromatography)

Model: LC-20AD [Shimadzu Corporation]; Detector: Fluorescence spectrophotometer RF-20Axs [Shimadzu Corporation]; Column: CAPCELL PAK C18 AQ φ4.6 mm x 250 mm [Shiseido Company, Limited]; Mobile phase: 20 mmol/L mixture of perchloric acid and methanol (mixing ratio 80:20); Flow rate: 0.7 mm/minute; Fluorescence excitation wavelength: 285 nm; Fluorescence measurement wavelength: 348 nm; and Column temperature: 40°C.

By summing up the free amino acid content measured in the manner described above, the total free amino acid content of the pet food can be calculated.

Furthermore, the free amino acid content present on the surface of pet food pellets can be calculated by measurement using the same method as described above except that an aqueous solution at a water temperature of 20 to 26 °C is used in place of the sulfosalicylic acid solution in the "Analysis method of free amino acid" described above, and the amino acid present on the surface of pet food pellets is extracted by shaking for 5 minutes.

By dividing the free amino acid content present on the surface of pet food pellets, which is calculated according to the method described above, by the total free amino acid content of the pet food, the "ratio of free amino acid content present on the surface of pet food pellets relative to the total free amino acid content of the pet food" can be calculated.

### Production method of pet food

The pet food of the present invention can be produced by a method containing a pellet-forming step and a coating step, which is described below. First, in the pellet-forming step, among the above-described raw materials, raw materials other than the palatability enhancing material containing amino acid are mixed with a stirrer, and the mixture of the raw materials is extruded by an extruder (pressing and extrusion granulator) under heating and pressure, and formed into pellets by cutting. The formed pellets are dried with a drier, and the dried pellets are cooled.

Next, in the coating step, the surface of the pellets cooled as above is coated with a palatability enhancing material by spraying or application. The amount of coating of the palatability enhancing material in the pet food is appropriately adjusted so as to be 1.5% by mass or more.

Furthermore, the shape and size of the pet food are not particularly limited, however, an example of the shape and size preferably includes the pellet having a diameter of around 5 to 15 mm and a thickness of around 2 to 5 mm.

In addition, the pet food of the present invention can enhance the palatability even in a pet food other than the food that is intended for preventing the generation of uroliths, as long as the pet food is one requiring strict adjustment of mineral component. As long as the pet food is the one having enhanced palatability while having a constitution of the present invention, such other pet foods are also included in the range of the present invention.

In addition, the pet food of the present invention can enhance the palatability of a pet food for a dog by using the pet food of the present invention not only as a pet food for a cat but also as a pet food for a dog. These inventions are in the range of the present invention.

### EXAMPLES

Hereinafter, the present invention will be specifically explained by way of Example, however, the present invention should not be limited to the Example.

### Production method of pet food

Among the raw materials having a mixing ratio shown in Table 1, raw materials other than the palatability enhancing material were mixed with a stirrer, and the mixture of the raw materials was extruded by an extruder (pressing and extrusion granulator) under heating and pressure, formed into pellets by cutting, and also the formed pellets were dried with a drier, and the dried pellets were further cooled. Next, coating was performed by the application of a palatability enhancing material on the surface of the cooled pellets. According to the above steps, a pet food according to Example or Comparative Examples was produced in the form of a pellet having a diameter of around 5 to 15 mm and a thickness of around 2 to 5 mm. Note that in Table 1, a palatability enhancing material (digest) means a decomposition product of a protein containing a fish extract and a meat extract.

**[Table 1]**

| Raw material mixing ratio (% by mass) | | Example | | Comparative Example 1 | | Comparative Example 2 | | Comparative Example 3 | |
|---|---|---|---|---|---|---|---|---|---|
| Plant-derived protein source material | Corn gluten meal | 15.00 | | 10.00 | | 15.00 | | 10.00 | |
| Animal-derived protein source material | Chicken meal | 0.00 | | 5.00 | | 0.00 | | 7.50 | |
| | Pork meat meal | 0.00 | | 0.00 | | 0.00 | | 3.50 | |
| | White fish meal | 4.50 | | 4.50 | | 4.50 | | 0.00 | |
| | Fish meal | 0.00 | | 0.00 | | 0.00 | | 3.50 | |
| | Beef tallow residue | 13.50 | | 13.50 | | 13.50 | | 4.50 | |
| | Beef tallow and lard residue | 0.00 | | 0.00 | | 0.00 | | 6.50 | |
| | (Total amount) | | 18.00 | | 23.00 | | 18.00 | | 25.50 |
| Palatability enhancing material | | 1.90 | | 0.90 | | 0.90 | | 0.90 | |
| Grains | | 52.65 | | 52.65 | | 52.65 | | 54.70 | |
| Beef tallow | | 5.50 | | 5.50 | | 5.50 | | 2.50 | |
| Fiber source material | | 0.50 | | 0.50 | | 0.50 | | 0.00 | |
| Inorganic compound | | 3.55 | | 3.00 | | 3.55 | | 1.05 | |
| Others | | 2.90 | | 4.45 | | 3.90 | | 5.35 | |

In addition, the content of protein of each pet food in Example and Comparative Examples, which was measured by the Kjeldahl method, was 28.0% by mass in Example and Comparative Example 2 and 29.0% by mass in Comparative Example 1. Furthermore, the total mineral content of Example, which was measured by conventionally known ICP atomic emission spectrometry, was 4.043%.

### Evaluation of the stability of mineral content

In the corn gluten meal used as a protein source material in Example and Comparative Example 2, and the chicken meal used as the main protein source material in Comparative Example 1 and Comparative Example 3, in ten lots of product, the content of calcium and phosphorus of each product lot was measured by ICP atomic emission spectrometry, and the maximum to the minimum value of calcium and phosphorus content was measured and evaluated as the fluctuation range of the content (% by mass) of each product lot. The results are shown in Table 2. From the Table 2, it was found that the mineral content of the corn gluten meal was less and the fluctuation range of the corn gluten meal was smaller, as compared with the chicken meal.

**[Table 2]**

| | Protein source material | Mineral | Minimum (% by mass) | Maximum (% by mass) | Fluctuation range |
|---|---|---|---|---|---|
| Example | Corn gluten meal | Calcium | 0.10 | 0.20 | 0.10 |
| | | Phosphorus | 0.25 | 0.50 | 0.25 |
| Comparative Example 1 | Chicken meal | Calcium | 2.03 | 7.69 | 5.66 |
| | | Phosphorus | 0.75 | 3.84 | 3.09 |

Furthermore, 100 g of pet food pellets of each of Example and Comparative Example 3 was used as one lot, in the pet foods of ten lots, the total mineral content (crude ash) of each product lot was measured by a heating ashing method, and the phosphorus content was measured by ICP atomic emission spectrometry, respectively, and the fluctuation range of the mineral content of each product lot was measured and evaluated. The results are shown in Table 3.

**[Table 3]**

| | Mineral | Minimum (% by mass) | Maximum (% by mass) | Average value (% by mass) | Fluctuation range |
|---|---|---|---|---|---|
| Example | Total mineral (crude ash) | 4.90 | 5.30 | 5.20 | 0.40 |
| | Phosphorus | 0.62 | 0.80 | 0.71 | 0.18 |
| Comparative Example 3 | Total mineral (crude ash) | 4.60 | 6.10 | 5.10 | 1.50 |
| | Phosphorus | 0.67 | 0.96 | 0.80 | 0.29 |

In addition, for 10 pellets of the pet food in Example, the calcium content of each pellet was measured, the maximum value of the content was 0.81% by mass and the minimum value of the content was 0.74% by mass.

From the Table 1, Table 2, and Table 3, it was found that in Example, the fluctuation range of the mineral content was extremely small, and in contrast, in Comparative Example 1 in which an animal-derived protein source material had been used, the fluctuation range was extremely large. From these measurement results it was found that due to the strict limitation of the mineral component content in a pet food to a constant range, the formulation of Example is preferable, and the pet food of Example is excellent in terms of quality stability. It was found that the pet food is preferable as a pet food for a senior cat of 6 years or over, for which suppression of the generation of uroliths is required by the adjustment of particularly the mineral component. Measurement of the free amino acid content present on the surface of pet food pellet

By the "analysis method of free amino acid" described above, the ratio of the free amino acid content present on the surface of pet food pellets of Example and Comparative Example 1 relative to the total free amino acid content of the pet food was analyzed. The results are shown in Table 4 as the surface abundance ratio (%) of free amino acid.

**[Table 4]**

| Surface abundance ratio of free amino acid (%) | |
|---|---|
| Example | Comparative Example 1 |
| 7.0 | 2.5 |

### Palatability measurement test

According the following method, a palatability measurement test was performed for the pet food of Example and Comparative Examples. The results are shown in Table 5.

Firstly, a combination of Example and Comparative Example 1, and a combination of Comparative Example 2 and Comparative Example 1 were used as the first set, and the second set, respectively, and for which each pet food was prepared. In each set, a test was performed by using 20 cats of 2 years or over as monitors for 2 days.

On the first day, in the pet foods for the first set, one pet food was provided on the left side of a cat, and the other pet food was provided on the right side of the cat, respectively at the same time in an amount of 70 g for each side for one cat, the amount of the pet food eaten by the cat was measured after a lapse of one hour.

In the total amount of the pet food eaten by the cat on the first day, the eaten amount of the pet food of Example, and the eaten amount of the pet food of Comparative Example were calculated by percentage. The percentages obtained from 20 cats that are monitors were averaged to obtain the result of the first day.

On the second day, in the pet foods for the first set, one pet food was provided on the left side of a cat, and the other pet food was provided on the right side of the cat, respectively at the same time in an amount of 70 g for each side for one cat, the amount of the pet food eaten by the cat was measured after a lapse of one hour.

In the total amount of the pet food eaten by the cat on the second day, the eaten amount of the pet food of Example, and the eaten amount of the pet food of Comparative Example 1 were calculated by percentage. The percentages obtained from 20 cats that are monitors were averaged to obtain the result of the second day.

In the end, the results of the first day and the second day were averaged to obtain the ratio of eaten amounts (palatability), that is a final result. It is indicated that the higher the value of palatability is, the more preferably the cat that is a monitor ate.

The pet food of the second set was also evaluated in the same manner as in the pet food of the first set.

**[Table 5]**

| | | |
|---|---|---|
| Palatability score (Comparison) | Example : Comparative Example 1 | Comparative Example 2 : Comparative Example 1 |
| | 50 : 50 | 40 : 60 |

As described above, a pet food using mainly a plant-derived protein source material is excellent in terms of quality stability as compared with a pet food using mainly an animal-derived protein source material (Comparative Examples 1 and 3). However, as shown in Table 5, for a pet food in which a plant-derived protein source material is increased instead of an animal-derived protein source, the palatability is largely lowered (Comparative Example 2) as compared with a pet food using mainly an animal-derived protein source material (Comparative Example 1). Furthermore, however, it was found that the pet food, the surface of which is coated with a predetermined palatability enhancing material (Example), has sufficiently high palatability although the pet food mainly contains a plant-derived protein source material as the protein source.

## Claims

1. A pet food, wherein
the content ratio of free amino acid present on the surface of pet food pellets is 5.0% or more relative to total free amino acid of the pet food, and
a fluctuation range as defined by the maximum to the minimum value of total mineral content among ten lots of product is 1.0% or less.

2. The pet food according to Claim 1, wherein the fluctuation range of the phosphorus content of each product lot is 0.2% or less.

3. A pet food, comprising
a plant-derived protein source material in the pet food at a ratio of 12% by mass or more to 20% by mass or less, and
an animal-derived protein source material in the pet food at a ratio of 20% by mass or less, wherein
the surface of pet food pellets is coated with a palatability enhancing material containing amino acid, and
the palatability enhancing material is contained in the pet food at a ratio of 1.5% by mass or more.

4. The pet food according to any one of Claims 1 to 3, wherein
an inorganic compound supplementing a mineral component is also added..

5. The pet food according to any one of Claims 1 to 4, wherein
the total mineral content in the plant-derived protein source material is 7% by mass or less, and
the total mineral content in the animal-derived protein source material is 10% by mass or more.

6. The pet food according to any one of Claims 1 to 5, wherein
the plant-derived protein source material is corn gluten.

7. The pet food according to any one of Claims 1 to 6, wherein
the corn gluten is contained in the pet food at a ratio of 12% by mass or more to 20% by mass.

8. The pet food according to any one of Claims 1 to 7, wherein
the phosphorus content is 0.50% by mass or more to less than 0.75% by mass.

9. The pet food according to any one of Claims 1 to 8, wherein
the pet food is a pet food for a cat.

10. The pet food according to Claim 9, wherein
the cat is a cat of 6 years or over.

11. A method for producing a pet food, comprising:
forming a pet food source material containing a protein source material that includes a plant-derived protein source material having a protein content of 40% by mass or more to 80% by mass or less at a content ratio of 12% by mass or more and an animal-derived protein source material having a protein content of 40% by mass or more to 80% by mass or less at a content ratio of 20% by mass or less, into pellets; and
coating the surface of pet food pellets with a palatability enhancing material containing amino acid, wherein
the amount of coating of the palatability enhancing material is adjusted so as to be 1.5% by mass or more in a pet food.
